# EUROPÄISCHE PATENTANMELDUNG

(11) **EP 1 710 966 A1**
(43) Veröffentlichungstag der Anmeldung: **11.10.2006**
(21) Anmeldenummer: 06015490.3
(22) Anmeldetag: 05.05.2004
(51) Int. Cl.: H04L 25/03

(54) **Verfahren zur Schätzung von in einem Funkblock über einen Funkkanal gesendeten Dateneinheiten sowie empfangende Station**

(30) Priorität: 13.06.2003 DE 10326810
(62) Teilanmeldung aus: 04741513.8
(71) Anmelder: SIEMENS AKTIENGESELLSCHAFT, 80333 München (DE)
(72) Erfinder: Götze, Jürgen, Prof. Dr., 44229 Dortmund (DE); Sinn, Christian Vincent, 59439 Holzwickede (DE)

(57) **Zusammenfassung**

Bei dem erfindungsgemäßen Verfahren zur Schätzung von in einem Funkblock (d) über einen Funkkanal gesendeten Dateneinheiten (d11, d12, d13, d14, d21, d22, d23, d24) wird aufgrund der gesendeten Dateneinheiten (d11, d12, d13, d14, d21, d22, d23, d24) in einer empfangenden Station (BS) eine Signalfolge (S) empfangen. Die Komponenten der empfangenen Signalfolge (S) werden in der zeitlichen Reihenfolge ihres Empfangs mindestens einem ersten und einem zweiten Signalblock (X1, X2, X3) zugeordnet und blockweise verarbeitet, wobei die Signalblöcke (X1, X2, X3) derart überlappen, dass wenigstens eine Komponente der empfangenen Signalfolge beiden Signalblöcken (X1, X2, X3) angehört und Schätzwerte werden für die gesendeten Dateneinheiten (d11, d12, d13, d14, d21, d22, d23, d24) anhand der Komponenten beider Signalblöcke (X1, X2, X3) bestimmt.

## Beschreibung

Die Erfindung betrifft ein Verfahren zur Schätzung von in einem Funkblock über einen Funkkanal gesendeten Dateneinheiten, sowie eine entsprechende empfangende Station.

In Funk-Kommunikationssystemen werden Informationen (beispielsweise Sprache, Bildinformation oder andere Daten) mit Hilfe von elektromagnetischen Wellen über eine Funkschnittstelle zwischen einer Basisstation und einer Mobilstation übertragen. Das Abstrahlen der elektromagnetischen Wellen erfolgt dabei mit Trägerfrequenzen, die in dem für das jeweilige System vorgesehenen Frequenzband liegen.

Das Grundprinzip von Vielfachträger (multi carrier)-Verfahren besteht darin, hochratige Informationsströme auf eine Anzahl von Strömen mit niedrigerer Rate aufzuteilen. Diese Ströme mit niedrigerer Rate werden simultan über eine Anzahl von Unterträgern übertragen. Bei dieser Übertragung treten Intersymbol-Interferenz (Inter Symbol Interference, ISI) und ein Übersprechen der Unterträger (Inter Carrier Interference, ICI) auf. Eine Möglichkeit dem Übersprechen der Unterträger zu begegnen, besteht darin, orthogonale, frequenzseparierte Unterträger zu verwenden. Intersymbol-Interferenzen können in der Regel dadurch gänzlich eliminiert werden, dass zu jedem Symbol ein Schutzzeitintervall (Guard Period) angefügt wird. Im Schutzzeitintervall wird das Symbol zyklisch ausgedehnt, um ein Übersprechen der Unterträger zu vermeiden. Wenn ein Übersprechen der Unterträger vorhanden ist, bedeutet dies, dass die Unterträger nicht zu einander orthogonal sind.

Eine Variante des Vielfachträger-Verfahrens mit orthogonalen, frequenzseparierten Unterträgern stellt das OFDM-Verfahren dar (Orthogonal Frequency Division Multiplex). Die Intersymbol-Interferenz wird hervorgerufen durch Mehrwegeausbreitungen. Bei der OFDM basierten Informationsübertragung in Funkkommunikationssystemen entsteht ein OFDM-Symbol, indem Nutzdaten auf Unterträger moduliert werden. Dies geschieht durch Anwendung der Inversen Fast-Fourier-Transformation (IFFT) auf die Nutzdaten. Anschließend wird entweder ein zyklisches Präfix (Cyclic Prefix, CP) vor jedes Symbol gestellt oder es werden 0-Informationen an jedes Symbol angehängt (Zero Padding, ZP). Durch Mehrwegeausbreitung im Funkkanal können nachfolgende OFDM-Symbole interferieren.

Um die Nutzdaten aus den empfangenen Daten zurück zu gewinnen, können folgende Methoden genutzt werden: Im CP-Fall werden Teile des empfangenen OFDM-Symbols ignoriert, so dass benachbarte OFDM-Symbole möglichst interferenzfrei sind. Auf die verbleibenden Daten eines OFDM-Symbols wird die Fast-Fourier-Transformation (FFT) angewendet und anschließend durch den Wert der Übertragungsfunktion des Funkkanals an der jeweiligen Unterträgerfrequenz geteilt. Damit können die Nutzdaten zurück gewonnen werden.

Der ZP-Fall kann durch geeignetes Anfügen der Empfangsdaten auf den CP-Fall zurückgeführt werden, so dass die Daten auf die gleiche Weise zurückgewonnen werden können. Weiterhin können im ZP-Fall die Nutzdaten durch Lösen eines überbestimmten Gleichungssystems anhand geeigneter Kriterien - wie beispielsweise Least Squares (LS) oder Minimum Mean Square Error (MMSE) - geschätzt werden.

Der Nutzen des CP liegt darin, dass benachbarte OFDM-Symbole nicht interferieren und die Unterträger nicht übersprechen, wenn das CP lang genug gewählt wird, dass heißt zumindest solange wie die maximale Kanalverzögerung (Delay Spread, DS). Weiterhin wird eine rechnerisch sehr effiziente Datenschätzung möglich. Gleiches gilt für den ZP-Fall.

Die Einfügung von Schutzzeitintervallen wie im Fall von CP oder ZP führen zu einer Verringerung der effektiven Datenrate der Nutzinformationen. Weiterhin wird im Fall des CP ein erheblicher Teil der Sendeleistung zum Senden eines CP verwendet, was besonders in mobilen Übertragungsverfahren unerwünscht ist. In Funksystemen nach Hiperlan/2 (High Performance Radio Local Area Network Type 2) macht das CP 20% der OFDM-Symbolzeit aus.

Aus der US 6345076 B1 ist ein Verfahren zum inkohärenten Empfang differenziell modulierter Daten beschrieben. Empfangene Symbole werden mit einer inkohärenten MLSE (maximumlikelihood sequence estimation) geschätzt. Zur Verbesserung der Empfangsqualität werden die empfangenen Symbole in überlappende Symbolblöcke aufgeteilt, die mit wenigstens einem Symbol überlappen. Da zu übertragende Informationen bei differentiell modulierten Daten nicht in den einzelnen Symbolen sondern in der Phasenänderung benachbarter Symbole enthalten sind, ist die Überlappung der Symbolblöcke erforderlich, damit für jedes Symbol eines Symbolblocks eine Referenzphase vorliegt.

Der Erfindung liegt daher die Aufgabe zugrunde, ein vorteilhaftes Verfahren zur Datenschätzung anzugeben, das eine Übertragung von Dateneinheiten ohne Schutzzeitintervalle ermöglicht.

Diese Aufgabe wird mit dem Verfahren sowie der empfangenden Station gemäß den unabhängigen Ansprüchen gelöst.

Vorteilhafte Aus- und Weiterbildungen der Erfindung sind Gegenstand der abhängigen Ansprüche.

Bei dem erfindungsgemäßen Verfahren zur Schätzung von in einem Funkblock über einen Funkkanal gesendeten Dateneinheiten wird aufgrund der gesendeten Dateneinheiten in einer empfangenden Station eine Signalfolge empfangen. Die Komponenten der empfangenen Signalfolge werden in der zeitlichen Reihenfolge ihres Empfangs mindestens einem ersten und einem zweiten Signalblock zugeordnet und blockweise verarbeitet, wobei die Signalblöcke derart überlappen, dass wenigstens eine Komponente der empfangenen Signalfolge beiden Signalblöcken angehört und Schätzwerte werden für die gesendeten Dateneinheiten anhand der Komponenten beider Signalblöcke bestimmt. Die Verwendung überlappender Signalblöcke zur Schätzung der gesendeten Dateneinheiten ermöglicht es auf Schutzzeitintervalle zwischen einzelnen Dateneinheiten zu verzichten. Insbesondere können mehrere Funkblöcke hintereinander ohne Schutzzeitintervalle gesendet und von der empfangenen Station ausgewertet, d. h. geschätzt werden.

Vorteilhafter Weise erfolgt die Überlappung der Signalblöcke derart, dass für wenigstens eine gesendete Dateneinheit anhand beider Signalblöcke jeweils ein Schätzwert ermittelt wird. Für die wenigstens eine gesendete Dateneinheit kann nun beispielsweise ein Mittelwert der Schätzwerte verwendet und somit eine verbesserte Schätzung erreicht werden.

In einer bevorzugten Weiterbildung der Erfindung wird nach Ermittlung der beiden Schätzwerte ausschließlich der anhand eines der beiden Signalblöcke ermittelte Schätzwert für die wenigstens eine gesendete Dateneinheit verwendet. Ist einer der beiden Schätzwerte wesentlich schlechter als der andere Schätzwert, wird derjenige Schätzwert, der den größten Fehler aufweist verworfen. Die Auswahl zwischen den beiden Schätzwerten ermöglicht in diesem Fall eine bessere Schätzung als dies beispielsweise durch eine Mittelung oder durch Verfahren möglich wäre, die nur einen Schätzwert für die wenigstens eine gesendete Dateneinheit liefern.

In einer Ausgestaltung wird den Signalblöcken jeweils eine zyklische Übertragungsmatrix zugeordnet und die Schätzwerte werden durch eine Multiplikation der Signalblöcke mit der jeweiligen inversen Übertragungsmatrix berechnet. Die Verwendung einer zyklischen Übertragungsmatrix bzw. der entsprechenden inversen Übertragungsmatrix ermöglicht eine besonders einfache Berechnung der Schätzwerte.

In einer alternativen Ausgestaltung wird den Signalblöcken jeweils eine Übertragungsmatrix mit Töplitzstruktur und Bandstruktur zugeordnet und die Schätzwerte werden durch eine Multiplikation der Signalblöcke mit der jeweiligen pseudoinversen Übertragungsmatrix berechnet. Die Verwendung einer Übertragungsmatrix mit Töplitz- und Bandstruktur bzw. der entsprechenden pseudoinversen Übertragungsmatrix hat den Vorteil, dass die Übertragungsmatrix vollen Spaltenrang hat und daher sichergestellt ist, dass die pseudoinverse Übertragungsmatrix immer existiert. Weiterhin können bei der erfindungsgemäßen Verwendung einer pseudoinversen Übertragungsmatrix zur Berechnung der Schätzwerte Fehlerraten für die Schätzwerte der gesendeten Dateneinheiten erreicht werden, die ebenso gering sind wie bei Datenübertragungen, die in bekannter Weise Schutzzeitintervalle zwischen einzelnen Dateneinheiten bzw. zwischen einzelnen Funkblöcken einfügen. Es kann somit erfindungsgemäß eine höhere Datenrate erreicht werden als bei bekannten Systemen ohne jedoch an Übertragungsqualität einzubüßen.

Die erfindungsgemäße empfangende Station weist alle zur Durchführung des Verfahrens benötigten Merkmale auf.

Die Erfindung wird im folgenden anhand von in den Figuren dargestellten Ausführungsbeispielen näher erläutert. Es zeigen:
- Fig. 1: eine schematische Datenübertragung von einer sendenden an eine empfangende Station,
- Fig. 2: eine erste Matrixdarstellung einer erfindungsgemäßen Datenschätzung,
- Fig. 3: eine zweite Matrixdarstellung einer erfindungsgemäßen Datenschätzung,
- Fig. 4: eine dritte Matrixdarstellung einer erfindungsgemäßen Datenschätzung und
- Fig. 5: Blockfehlerraten in Abhängigkeit von einem Signal-zu-Rausch-Verhältnis für erfindungsgemäße Datenschätzungen mit unterschiedlichen Parametern.

Gleiche Bezugszeichen in den Figuren bezeichnen gleiche Gegenstände.

Eine empfangende Station ist jede Station, die Signale empfangen kann. Im nachfolgenden wird als empfangende Station eine Basisstation betrachtet. Selbstverständlich kann eine empfangende Station auch eine Mobilstation sein. Eine Mobilstation ist beispielsweise ein Mobiltelefon oder auch eine ortsbewegliche Vorrichtung zur Übertragung von Bild- und/oder Tondaten, zum Fax-, Short Message Service SMS- und Email-Versand und zum Internet-Zugang. Es handelt sich mithin um eine allgemeine Empfangseinheit eines Funkkommunikationssystems.

Die Erfindung kann vorteilhaft in beliebigen Funkkommunikationssystemen verwendet werden. Unter Funkkommunikationssystemen sind beliebige Systeme zu verstehen, in denen eine Datenübertragung zwischen Stationen über eine Funkschnittstelle erfolgt. Die Datenübertragung kann sowohl bidirektional als auch unidirektional erfolgen. Funkkommunikationssysteme sind insbesondere beliebige Mobilfunksysteme beispielsweise nach dem GSM-(Global System for Mobile Communication) oder dem UMTS-(Universal Mobile Telecommunication System) Standard. Auch zukünftige Mobilfunksysteme beispielsweise der vierten Generation und Vielträger-Systeme mit einem OFDM-Verfahren oder Einzelträgersysteme mit zyklischem Prefix (CP) bzw. 0-Informationen (ZP) sollen unter Funkkommunikationssystemen verstanden werden.

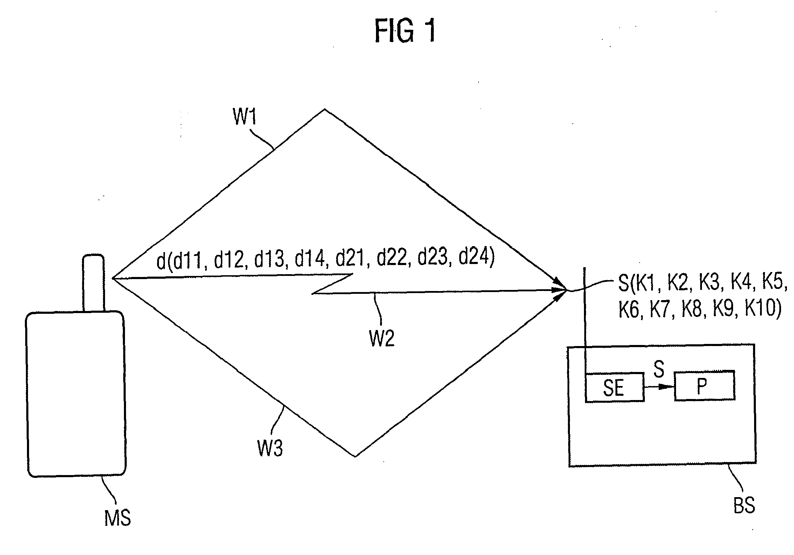

In Figur 1 ist schematisch eine Datenübertragung von einer sendenden Station MS an eine empfangende Station BS dargestellt. Die sendende Station MS sendet einen Funkblock d, der aus acht Dateneinheiten d11, d12, d13, d14, d21, d22, d23, d24 besteht über einen Funkkanal an die empfangende Station BS. Aufgrund von Mehrwegeausbreitung beispielsweise über drei Wege W1, W2, W3, empfängt die empfangende Station BS eine Signalfolge S bestehend aus zehn Komponenten K1, K2, K3, K4, K5, K6, K7, K8, K9, K10. Die empfangende Station BS weist eine Sende- und Empfangseinheit SE sowie eine Auswerteeinheit P zur Speicherung der empfangenen Signalfolge S und zur Schätzung der gesendeten Dateneinheiten d11, d12, d13, d14, d21, d22, d23, d24 auf. Der Funkkanal kann durch eine Kanalimpulsantwort h beschrieben werden, die sich in diesem Beispiel aus drei Komponenten h1, h2, h3 zusammensetzt, d. h. die Länge L=3 aufweist. Die Länge L=3 bedeutet dabei, dass die zuerst gesendete Dateneinheit d11 aufgrund der Mehrwegeausbreitung noch mit den nachfolgenden zwei gesendeten Dateneinheiten d12, d13 interferiert. Die Wirkung des Funkkanals auf die Übertragung des Funkblocks d lässt sich mathematisch durch eine aus der Kanalimpulsantwort h bestimmte Systemmatrix H beschreiben.

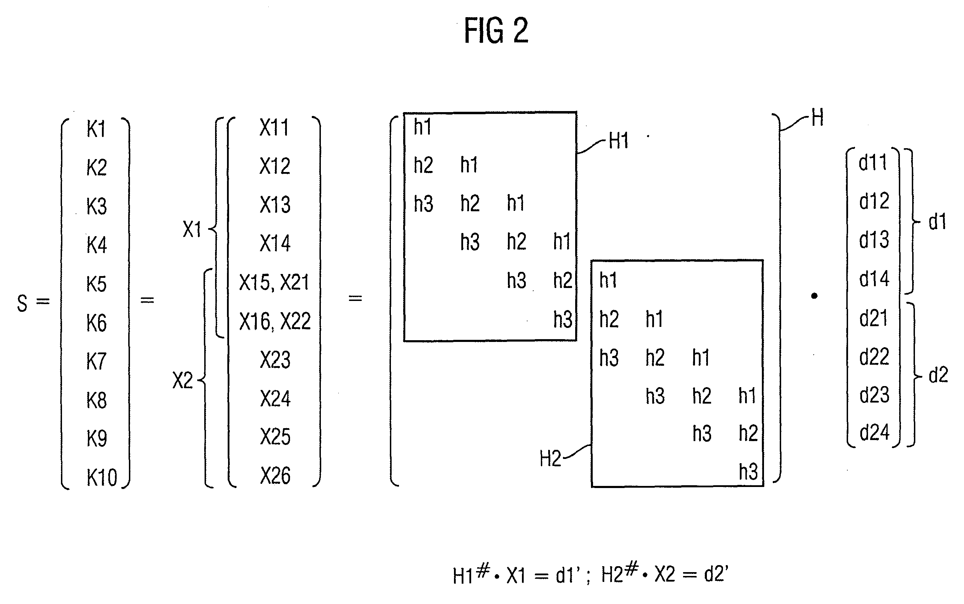

In Figur 2 ist eine Matrixdarstellung für die Datenübertragung von der sendenden Station BS an die empfangende Station BS dargestellt. Die empfangene Signalfolge S kann durch eine Multiplikation von Systemmatrix H und Funkblock d ausgedrückt werden. In den Komponenten K1, K2, K3, K4, K5, K6, K7, K8, K9, K10 der Signalfolge S sind die Interferenzen zwischen den gesendeten Dateneinheiten d11, d12, d13, d14, d21, d22, d23, d24 enthalten. Die zeitliche Reihenfolge des Empfangs der Komponenten K1, K2, K3, K4, K5, K6, K7, K8, K9, K10 der Signalfolge S entspricht der Nummerierung von eins bis zehn.

Zur Schätzung der gesendeten Dateneinheiten d11, d12, d13, d14, d21, d22, d23, d24 bildet die empfangende Station BS einen ersten Signalblock X1 mit Komponenten X11, X12, X13, X14, X15, X16 aus den ersten sechs Komponenten K1, K2, K3, K4, K5, K6 der Signalfolge S und eine zweiten Signalblock X2 mit den Komponenten X21, X22, X23, X24, X25, X26 aus den letzten sechs Komponenten K5, K6, K7, K8, K9, K10 der Signalfolge S. Die letzten beiden Komponenten X15, X16 des ersten Signalblocks X1 entsprechen dabei den ersten beiden Komponenten X21, X22 des zweiten Signalblocks X2, d. h. X15=X21 und X16=X22. Den beiden Signalblöcken X1, X2 wird jeweils eine Übertragungsmatrix H1, H2 zugeordnet. Die Multiplikation der jeweiligen Übertragungsmatrix H1, H2 mit einem ersten bzw. einem zweiten Sendeblock d1, d2 der gesendeten Dateneinheiten d11, d12, d13, d14, d21, d22, d23, d24 ergibt jeweils den ersten bzw. zweiten Signalblock X1, X2 unter Vernachlässigung der Interferenz zwischen den beiden Sendeblöcken d1, d2. Der erste Sendeblock d1 besteht aus den ersten vier Dateneinheiten d11, d12, d13, d14 des Funkblocks d, und der zweite Sendeblock d2 besteht aus den letzten vier Dateneinheiten d21, d22, d23, d24 des Funkblocks d.

Die Bezeichnung der Komponenten der Sendeblöcke und der Signalblöcke ist so gewählt, dass die erste Zahl die Zuordnung zu dem entsprechenden Block ermöglicht, während die zweite Zahl die Position innerhalb des Blocks angibt. X13 ist somit die dritte Komponente X13 des ersten Signalblocks X1.

Sowohl die Systemmatrix H als auch die Übertragungsmatrizen H1, H2 haben Töplitzstruktur und Bandstruktur, d. h. sie haben vollen Spaltenrang und eine pseudoinverse Übertragungsmatrix existiert für diese Übertragungsmatrizen immer. Eine Matrix hat Bandstruktur wenn ein rechter oberer Dreiecksteil und ein linker unterer Dreiecksteil der Matrix ausschließlich Nullen enthält. Eine Matrix hat Töplitzstruktur, wenn alle Komponenten innerhalb der Diagonalen den gleichen Wert haben.

Die empfangende Station BS schätzt nun die gesendeten Dateneinheiten d11, d12, d13, d14 des ersten Sendeblocks d1 durch Multiplikation des ersten Signalblocks X1 mit der pseudoinversen Übertragungsmatrix H1^{#} der ersten Übertragungsmatrix H1. In gleicher Weise werden die gesendeten Dateneinheiten d21, d22, d23, d24 des zweiten Sendeblocks d2 durch Multiplikation des zweiten Signalblocks X2 mit der pseudoinversen Übertragungsmatrix H2^{#} der zweiten Übertragungsmatrix H2 geschätzt. Es gilt: H1^{#} * X1 = d1` und H2^{#} * X2 = d2'. Dabei bezeichnen d1' und d2' geschätzte Sendeblöcke d1' und d2', d. h. die Schätzwerte für die gesendeten Dateneinheiten d11, d12, d13, d14, d21, d22, d23, d24 des Funkblocks d.

Die Erfindung ermöglicht, dass in Systemen, die bisher Schutzzeitintervalle zwischen Sendeblöcken verwenden, wie beispielsweise OFDM-Systemen oder blockbasierten Einzelträgersystemen mit zyklischem Prefix (CP) bzw. 0-Informationen (ZP), auf Schutzzeitintervalle verzichtet werden kann. In dem zu Figur 2 beschriebenen Ausführungsbeispiel nehmen zwar Interferenzen zwischen den beiden Sendeblöcken d1, d2 durch den Verzicht auf ein Schutzzeitintervall zu, aber die Übertragungskapazität, d. h. die Datenrate wird erhöht.

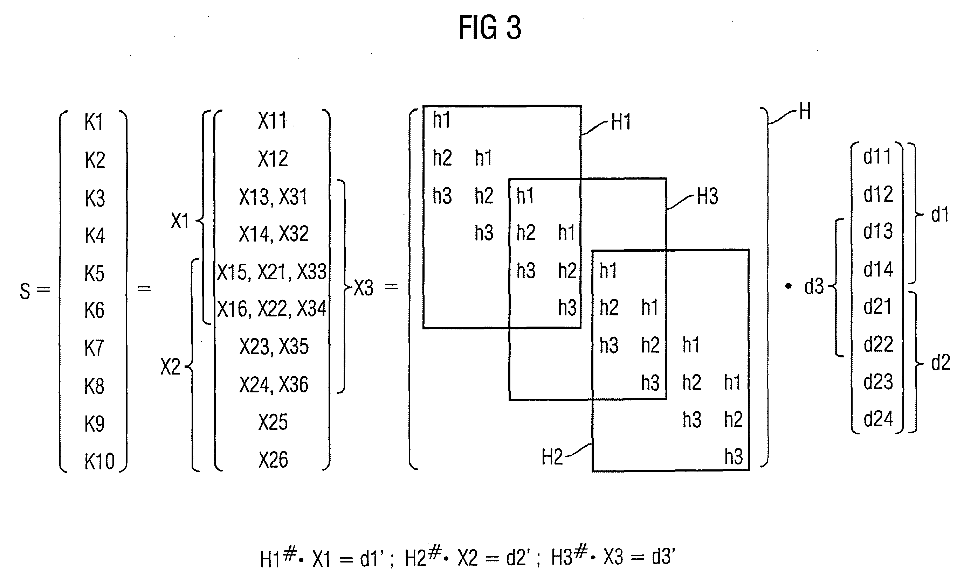

Um weiterhin die Interferenzen zwischen den als ein Funkblock d, d. h. ohne Schutzzeitintervalle übertragenen Sendeblöcken d1, d2 bei der Schätzung der gesendeten Dateneinheiten d11, d12, d13, d14, d21, d22, d23, d24 zu eliminieren, wird in einer in Figur 3 dargestellten bevorzugten Ausgestaltung der Erfindung eine spezielle Bildung von Signalblöcken verwendet.

Figur 3 zeigt schematisch die spezielle Bildung von Signalblöcken, die eine Schätzung der gesendeten Dateneinheiten d11, d12, d13, d14, d21, d22, d23, d24 ermöglicht, die Fehlerraten aufweist, wie sie bisher nur bei Verwendung von Schutzzeitintervallen erreicht wurde.

Der bereits zu den Figuren 1 und 2 beschriebene Funkblock d wird über den gleichen Funkkanal mit der Kanalimpulsantwort h der Länge L=3 übertragen und führt wiederum zum Empfang der Signalfolge S.

Zur Schätzung der in dem Funkblock d gesendeten Dateneinheiten d11, d12, d13, d14, d21, d22, d23, d24 werden nun drei Signalblöcke X1, X2, X3 gebildet. Die ersten beiden Signalblöcke X1, X2 sind die gleichen Signalblöcke X1, X2 wie bereits zu Figur 1 beschrieben. Der dritte Signalblock X3 mit den Komponenten X31, X32, X33, X34, X35, X36 wird aus der zweiten bis achten Komponente K2, K3, K4, K5, K6, K7, K8 der Signalfolge S gebildet und stimmt somit mit den letzten vier Komponenten X13, X14, X15, X16 des ersten Signalblocks X1 und mit den ersten vier Komponenten X21, X22, X23, X24 des zweiten Signalblocks X2 überein. Es gilt daher: X31=X13, X32=X14, X33=X15=X21, X34=X16=X22, X35=X23 und X36=X24.

Diese Bildung der Signalblöcke X1, X2, X3 lässt sich durch drei überlappende Sendeblöcken d1, d2, d3 darstellen, denen jeweils eine Übertragungsmatrix H1, H2, H3 zugeordnet wird. Diese virtuellen Sendeblöcke werden selbstverständlich nicht gesendet sondern dienen einer Beschreibung des Verfahrens. Gesendet wird der Funkblock d.

Dem ersten und zweiten Signalblock X1, X2 werden die bereits zuvor beschriebenen Übertragungsmatrizen H1, H2 zugeordnet. Der dritte Signalblock X3 hat eine dritte Übertragungsmatrix H3, die mit der ersten und zweiten Übertragungsmatrix H1, H2 überlappt.

Die empfangende Station BS bildet nun zu jeder Übertragungsmatrix H1, H2, H3 die zugehörige pseudoinverse Übertragungsmatrix H1^{#}, H2^{#}, H3^{#} und multipliziert diese mit dem entsprechenden Signalblock X1, X2, X3. Anhand des ersten Signalblocks X1 ergibt sich ein erster geschätzter Sendeblock d1' mit Schätzwerten für die ersten vier gesendeten Dateneinheiten d11, d12, d13, d14 des Funkblocks d. Der zweite Signalblock X2 liefert einen zweiten geschätzten Sendeblock d2' mit Schätzwerten für die letzen vier gesendeten Dateneinheiten d21, d22, d23, d24. Der dritte Signalblock X3 ergibt einen dritten geschätzten Sendeblock d3' mit Schätzwerten für die dritte bis sechste gesendete Dateneinheit d13, d14, d21, d22, d. h. für die letzten gesendeten Dateneinheiten d13, d14 des ersten Sendeblocks d1 und für die ersten beiden gesendeten Dateneinheiten d21, d22 des zweiten Sendeblocks d2. Aufgrund der Interferenzen zwischen den Dateneinheiten der Sendeblöcken d1, d2, d3 weisen die ersten und letzten der für die Sendeblöcke d1, d2, d3 ermittelten Schätzwerte der gesendeten Dateneinheiten den größten Fehler auf. Für den ersten Sendeblock d1 sind dies die Komponenten d11 und d14, für den zweiten Sendeblock d2 die Komponenten d21 und d24 und für den dritten Sendeblock X3 die Komponenten d13 und d22. Daher ergibt sich die beste Schätzung der gesendeten Dateneinheiten d11, d12, d13, d14, d21, d22, d23, d24, wenn die Schätzwerte mit den größten Fehlern nicht verwendet werden. Verwendet werden daher für die ersten drei gesendeten Dateneinheiten d11, d12, d13 die Schätzwerte, die anhand des ersten Signalblocks X1 bestimmt wurden. Die vierte und fünfte gesendete Dateneinheit d14, d21 wird anhand des dritten Signalblocks X3 bestimmt, während die sechste bis achte gesendete Dateneinheit d22, d23, d24 anhand des zweiten Signalblocks X2 bestimmt wird. Besonders vorteilhaft ist es, wenn vor und nach dem Funkblock d kontinuierlich weitere Funkblöcke gesendet werden. Auf diese Weise können weitere Signalblöcke gebildet werden, die mit dem ersten bzw. dem zweiten Signalblock X1, X2 in gleicher Weise überlappen wie der dritte Signalblock X3. Die erste und die letzte gesendete Dateneinheit d11, d24 können dann anhand des jeweils mit dem ersten bzw. mit dem zweiten Signalblock X1, X2 überlappenden weiteren Signalblocks geschätzt werden. Daraus resultiert eine verbesserte Schätzung für die erste und die letzte gesendete Dateneinheit d11, d24.

Bei einer kontinuierlichen Datenübertragung können erfindungsgemäß, d. h. durch die Verwendung überlappender Signalblöcke bzw. überlappender Übertragungsmatrizen bzw. überlappender (virtueller) Sendeblöcke, alle gesendeten Dateneinheiten ebenso gut geschätzt werden wie dies bisher nur bei Verwendung von Schutzzeitintervallen zwischen gesendeten Dateneinheiten bzw. zwischen (reellen) Sendeblöcken bzw. zwischen Funkblöcken möglich war.

Selbstverständlich können auch größere Signalblöcke mit mehr als sechs, z. B. 32 oder 64 Komponenten gebildet werden bzw. die Überlappung der Signalblöcke kann größer als vier Komponenten sein. Weiterhin können andere Kanalimpulsantworten auftreten, die Längen größer als drei aufweisen. Auch unter derart geänderten Übertragungsbedingungen kann die Erfindung in gleicher Weise angewendet werden.

Statt der Zuordnung von Übertragungsmatrizen mit Töplitzstruktur und Bandstruktur, können den überlappenden Signalblöcken auch zyklische Übertragungsmatrizen zugeordnet werden. Mit diesen kann einfacher gerechnet werden als mit Töplitz-Übertragungsmatrizen, allerdings lassen sich mit Töplitz-Übertragungsmatrizen geringere Fehlerraten erreichen als mit zyklischen Übertragungsmatrizen.

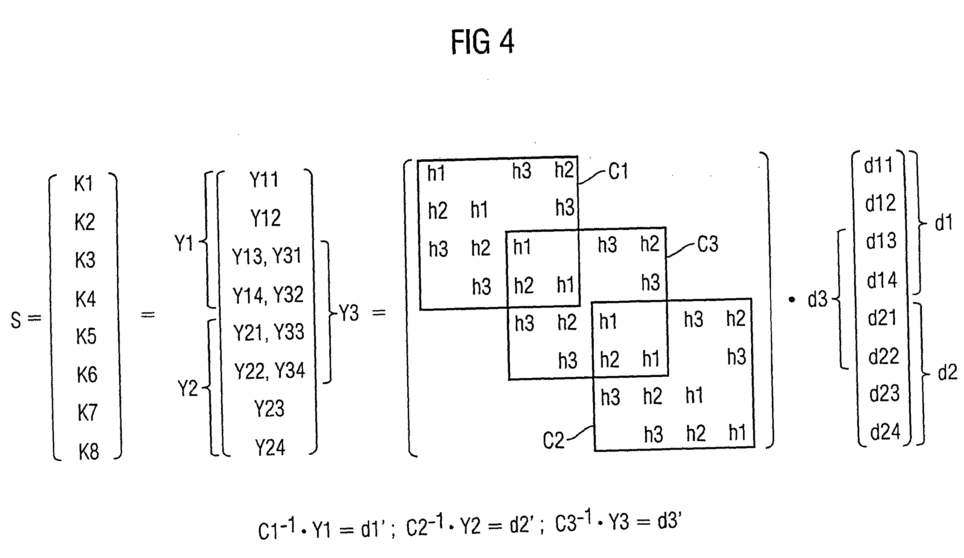

In Figur 4 ist für die Übertragung des Funkblocks d aus Figur 2 bzw. Figur 3 die Zuordnung von zyklischen Übertragungsmatrizen C1, C2, C3 zu entsprechend überlappenden Signalblöcken Y1, Y2, Y3 dargestellt. Ein erster Signalblock Y1 mit den Komponenten Y11, Y12, Y13, Y14 besteht aus den ersten vier Komponenten K1, K2, K3, K4 der Signalfolge S. Ein zweiter Signalblock Y2 mit den Komponenten Y21, Y22, Y23, Y24 besteht aus der fünften bis achten Komponente K5, K6, M7, M8 der Signalfolge S, während ein dritter Signalblock Y3 mit den Komponenten Y31, Y32, Y33, Y34 aus der dritten bis sechsten Komponente K3, K4, K5, K6 der Signalfolge S besteht. Es gilt: Y13=Y31, Y14=Y32, Y21=Y33 und Y22=Y34. Die letzten beiden Komponenten K9, K10 der Signalfolge S werden erst verwendet, wenn bei einer sich an den Funkblock d anschließenden Übertragung eines weiteren Funkblocks ein mit dem zweiten Signalblock Y2 überlappender Signalblock gebildet wird. Die Schätzung der gesendeten Dateneinheiten d11, d12, d13, d14, d21, d22, d23, d24 erfolgt in gleicher Weise wie für Figur 3 beschrieben. Der Unterschied besteht lediglich darin, dass die zyklischen Übertragungsmatrizen C1, C2, C3 quadratisch sind und daher inverse Übertragungsmatrizen C1⁻¹, C2⁻¹, C3⁻¹ anstelle pseudoinverser Übertragungsmatrizen haben. Es gilt: C1⁻¹ * Y1 = d1', C2⁻¹ * Y2 = d2' und C3⁻¹ * Y3 = d3'.

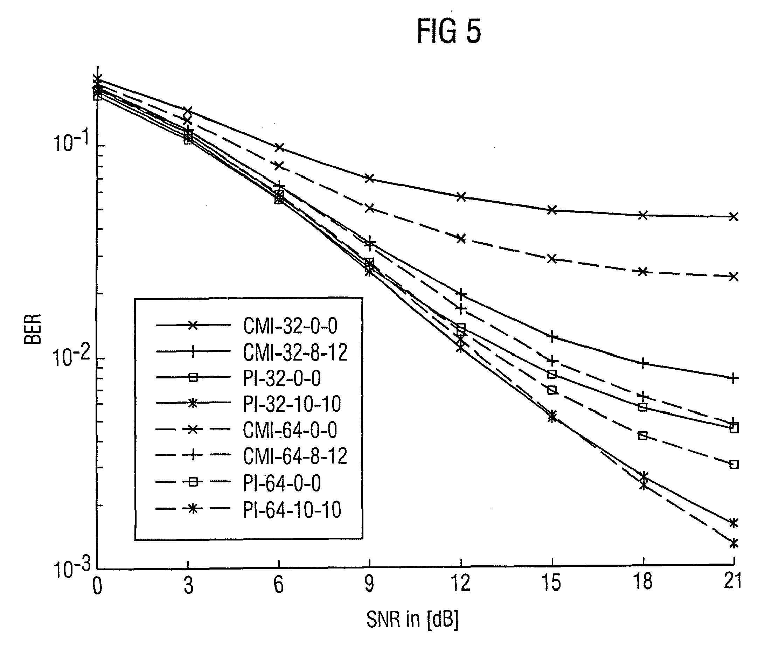

In Figur 5 sind Blockfehlerraten BER für geschätzte Dateneinheiten in Abhängigkeit vom Signal-zu-Rausch-Verhältnis SNR dargestellt. Verwendet wurden pseudoinverse und inverse Matrizen sowie verschiedene Signalblockgrößen und verschiedene Überlappungen zwischen den Signalblöcken, d. h. zwischen den Übertragungsmatrizen bzw. den entsprechenden Sendeblöcken. Hierbei steht CMI für eine inverse zyklische Übertragungsmatrix und PI für eine pseudoinverse Übertragungsmatrix. Die weiteren Zahlen in jeder Zeile geben von links nach rechts die Größe der Signalblöcke sowie die Anzahl der zu Beginn und zum Ende eines geschätzten Sendeblocks verworfenen, d. h. nicht verwendeten Schätzwerte von gesendeten Dateneinheiten. Der Detektionsfehler der gesendeten Dateneinheiten entsteht sowohl aufgrund der durch Mehrwegeausbreitung hervorgerufenen Interferenzen zwischen den Dateneinheiten als auch durch ein Rauschen im Funkkanal, beispielsweise durch Datenübertragungen weiterer sendender Stationen.

## Patentansprüche

1. Verfahren zur Schätzung von in einem Funkblock (d) über einen Funkkanal gesendeten Dateneinheiten (d11, d12, d13, d14, d21, d22, d23, d24), bei dem
- aufgrund der gesendeten Dateneinheiten (d11, d12, d13, d14, d21, d22, d23, d24) in einer empfangenden Station (BS) eine Signalfolge (S) empfangen wird,
- die Komponenten (K1, K2, K3, K4, K5, K6, K7, K8, K9, K10) der empfangenen Signalfolge (S) in der zeitlichen Reihenfolge ihres Empfangs mindestens einem ersten und einem zweiten Signalblock (X1, X2, X3; Y1, Y2, Y3) zugeordnet und blockweise verarbeitet werden, wobei die Signalblöcke (X1, X2, X3; Y1, Y2, Y3) derart überlappen, dass wenigstens eine Komponente (K3, K4, K5, K6, K7, K8) der empfangenen Signalfolge (S) beiden Signalblöcken (X1, X2, X3; Y1, Y2, Y3) angehört,
- und Schätzwerte für die gesendeten Dateneinheiten (d11, d12, d13, d14, d21, d22, d23, d24) anhand der Komponenten beider Signalblöcke (X1, X2, X3; Y1, Y2, Y3) bestimmt werden, wobei die Überlappung der Signalblöcke (X1, X2, X3; Y1, Y2, Y3) derart erfolgt, dass für wenigstens eine gesendete Dateneinheit (d13, d14, d21, d22) anhand beider Signalblöcke (X1, X2, X3; Y1, Y2, Y3) jeweils ein Schätzwert ermittelt wird,
**dadurch gekennzeichnet,**
**dass** für die wenigstens eine gesendete Dateneinheit (d13, d14, d21, d22) ein Mittelwert der Schätzwerte verwendet wird.

2. Verfahren nach Anspruch 1, bei dem
den Signalblöcken (Y1, Y2, Y3) jeweils eine zyklische Übertragungsmatrix (C1, C2, C3) zugeordnet wird und die Schätzwerte durch eine Multiplikation der Signalblöcke (Y1, Y2, Y3) mit der jeweiligen inversen Übertragungsmatrix berechnet werden.

3. Verfahren nach Anspruch 1, bei dem
den Signalblöcken (X1, X2, X3) jeweils eine Übertragungsmatrix (H1, H2, H3) mit Töplitzstruktur und Bandstruktur zugeordnet wird und die Schätzwerte durch eine Multiplikation der Signalblöcke (X1, X2, X3) mit der jeweiligen pseudoinversen Übertragungsmatrix berechnet werden.

4. Empfangende Station (BS) mit
- Mitteln (SE) zum Empfang einer Signalfolge (S) aufgrund von in einem Funkblock (d) gesendeten Dateneinheiten (d11, d12, d13, d14, d21, d22, d23, d24),
- Mitteln (P) zur Zuordnung der Komponenten (K1, K2, K3, K4, K5, K6, K7, k8, k9, K10) der empfangenen Signalfolge (S) in der zeitlichen Reihenfolge ihres Empfangs zu mindestens einem ersten und einem zweiten Signalblock (X1, X2, X3) und mit Mitteln (P) zur blockweisen Verarbeitung der Signalblöcke (X1, X2, X3), wobei die Signalblöcke (X1, X2, X3) derart überlappen, dass wenigstens eine Komponente (K3, K4, K5, K6, K7, K8) der empfangenen Signalfolge beiden Signalblöcken (X1, X2, X3) angehört,
- und mit Mitteln (P) zur Bestimmung von Schätzwerten für die gesendeten Dateneinheiten (d11, d12, d13, d14, d21, d22, d23, d24) anhand der Komponenten beider Signalblöcke (X1, X2, X3), wobei die Mittel (P) die Überlappung der Signalblöcke (X1, X2, X3; Y1, Y2, Y3) derart durchführen, dass für wenigstens eine gesendete Dateneinheit (d13, d14, d21, d22) anhand beider Signalblöcke (X1, X2, X3; Y1, Y2, Y3) jeweils ein Schätzwert ermittelt wird,
**dadurch gekennzeichnet,**
- **dass** die Mittel (P) dazu ausgebildet sind, für die wenigstens eine gesendete Dateneinheit (d13, d14, d21, d22) einen Mittelwert der Schätzwerte zu verwenden.
